# EUROPEAN PATENT SPECIFICATION

(11) **EP 3 904 663 B1**
(45) Date of publication and mention of the grant of the patent: **26.04.2023**
(21) Application number: 19903013.1
(22) Date of filing: 27.12.2019
(51) Int. Cl.: F02D 41/14, F02D 41/06

(54) **EXCESS AIR COEFFICIENT CONTROL METHOD AND DEVICE FOR CATALYTIC CONVERTER, VEHICLE, AND STORAGE MEDIUM**
VERFAHREN UND VORRICHTUNG ZUR STEUERUNG DES LUFTÜBERSCHUSSKOEFFIZIENTEN FÜR EINEN KATALYSATORWANDLER, FAHRZEUG UND SPEICHERMEDIUM
PROCÉDÉ ET DISPOSITIF DE RÉGULATION DE COEFFICIENT D'EXCÈS D'AIR POUR CONVERTISSEUR CATALYTIQUE, VÉHICULE ET SUPPORT DE STOCKAGE

(30) Priority: 28.12.2018 CN 201811626662
(43) Date of publication of application: 03.11.2021
(73) Proprietor: Great Wall Motor Company Limited, Baoding, Hebei 071000 (CN)
(72) Inventor: SU, Bohao, Baoding, Hebei 071000 (CN); ZHANG, Yang, Baoding, Hebei 071000 (CN); CHANG, Jincai, Baoding, Hebei 071000 (CN); WANG, Yiwang, Baoding, Hebei 071000 (CN); QU, Wei, Baoding, Hebei 071000 (CN); ZHANG, Peng, Baoding, Hebei 071000 (CN); TSUNODA, Hiroshi, Baoding, Hebei 071000 (CN); TANG, Qiang, Baoding, Hebei 071000 (CN); SUN, Huidi, Baoding, Hebei 071000 (CN); YANG, Xufei, Baoding, Hebei 071000 (CN); WANG, Weiqiang, Baoding, Hebei 071000 (CN); YANG, Wei, Baoding, Hebei 071000 (CN)
(74) Representative: Klunker IP Patentanwälte PartG mbB
(86) International application number: PCT/CN2019/129117
(87) International publication number: WO 2020/135692

(56) References cited:
- EP-A1- 3 192 989
- CN-A- 101 294 517
- DE-A1-102007 017 413
- US-A1- 2017 191 397

## Description

### FIELD

The present application relates to the technical field of engine pollutant emission control, and in particular to a method and an apparatus for controlling an excess air coefficient of a catalytic converter, a vehicle and a storage medium.

### BACKGROUND

In an exhaust gas emission process, a catalytic converter is configured to convert harmful ingredients generated during combustion of a combustible mixture into harmless ingredients. However, in a stage before the catalytic converter is ignited, an excess air coefficient sensor (which may play a role in air-fuel ratio feedback) is still in an open-loop control stage (i.e., the air-fuel ratio may not reach a theoretical air-fuel ratio), so it is difficult to reduce the emissions of NMOG and NOx at the same time, and it is difficult to reach a emission standard of the sum of NMOG+ NOx added by exhaust gas emission regulations. Where the excess air coefficient refers to a ratio of the amount of intake air for fuel combustion to a standard air amount, which is an important parameter for reflecting a ratio of fuel to air, and is represented by a symbol "λ". The air-fuel ratio refers to a ratio of air mass to fuel mass in the combustible mixture, and the theoretical air-fuel ratio refers to an air-fuel ratio only in case that the combustible mixture is in a stoichiometric relationship. In case that the air-fuel ratio is 14.7, the catalytic converter may achieve the highest efficiency in purifying harmful ingredients, such as NMOG, CO and Nox. For gasoline engines, the excess air coefficient at a start process is determined by a fuel injection volume calculated based on an air intake volume. However, the air intake volume and the injection volume themselves have errors, so it is difficult to achieve an accurate control of the excess air coefficient λ=1. It is difficult to oxidize HC in the absence of oxygen, and a large amount of NOx is generated in an environment with excessive oxygen.

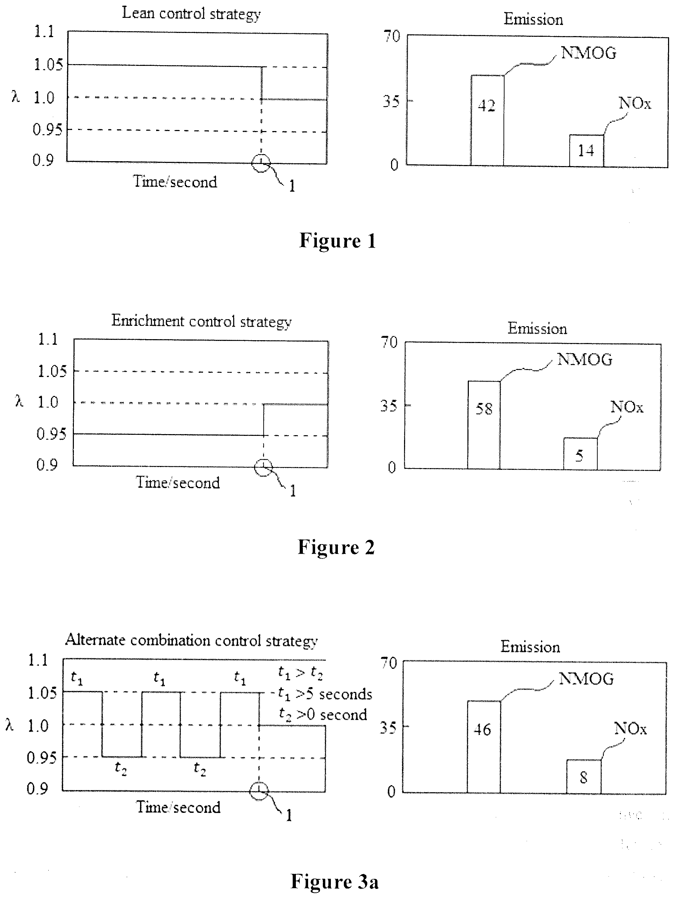

FIG. 1 shows a schematic diagram of a lean control strategy and corresponding emission value in the conventional technology, FIG. 2 shows a schematic diagram of an enrichment control strategy and corresponding emission value in the conventional technology. In combination with FIG.1 and FIG.2, for a lean control strategy, oxygen content is high. CO is mainly reacted with the oxygen, and CO does not react with NOx or only a small amount of CO is reacted with NOx. Specifically, an emission value of NMOG is 42 and an emission value of the NOx is 14, a total amount of NMOG+ NOx is still in a high level. In a case of the enrichment control strategy, oxygen content is low. Although CO is still reacted with NOx, NMOG content is high. NOx is slightly generated, which is further slightly reacted with the CO. An emission value of NMOG is 58 and an emission value of NOx is 5, that is, a total amount of NMOG+ NOx is still in a high level. CN101294517A discloses alternating the air-fuel ratio between lean and rich after engine start.

### SUMMARY

In view of this, an excess air coefficient control method of a gasoline engine catalytic converter is provided according to the present application, to control an excess air coefficient to switch between a first set value and a second set value, in an engine idling stage that after an engine is started and before a catalytic converter is ignited. In case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control, until an excess air coefficient sensor falls into a closed loop, to simultaneously reduce the emission of NMOG and NOx.

In order to achieve the above object, technical solutions of the present application are achieved as follows.

An excess air coefficient control method of a gasoline engine catalytic converter includes:
controlling an excess air coefficient to switch between a first set value and a second set value until an excess air coefficient sensor falls into a closed loop, in an engine idling stage that after an engine is started and before a catalytic converter is ignited;
where, the excess air coefficient is a ratio of the amount of intake air for fuel combustion to a standard air amount, wherein in case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control.

Further, the first set value ranges at [1, 1.05], and the second set value ranges at [0.95, 1].

Further, the process of controlling an excess air coefficient to switch between a first set value and a second set value includes:
controlling the excess air coefficient to switch to the second set value after maintaining the first set value for a first set time period, and controlling the excess air coefficient to switch to the first set value after maintaining the second set value for a second set time period.

Further, a duration of the first set time period is longer than a duration of the second set time period.

Further, the duration of the first set time period ranges from 4s to 5s, and the duration of the second set time period ranges from 2s to 3s.

Compared with the conventional technology, the excess air coefficient control method of the gasoline engine catalytic converter provided according to the present application has the following advantages.

In the excess air coefficient control method of a gasoline engine catalytic converter provided according to the present application, to control an excess air coefficient to switch between a first set value and a second set value, in an engine idling stage that after an engine is started and before a catalytic converter is ignited. In case that the excess air coefficient is controlled at the first set value, an air-fuel ratio is formed greater than 14.7 to perform a lean control, to reduce emission of NMOG; and in case that the excess air coefficient is controlled at the second set value, the air-fuel ratio is formed less than 14.7 to perform an enrichment control, and CO is reacted with NOx to reduce emission of NOx, until an excess air coefficient sensor falls into a closed loop. With above alternate control, the excess air coefficient is controlled to switch between the first set value and the second set value, so as to simultaneously reduce emission of NMOG and NOx.

Another object of the present application is to provide an excess air coefficient control apparatus of a gasoline engine catalytic converter, to control an excess air coefficient to switch between a first set value and a second set value through the excess air coefficient control apparatus of the gasoline engine catalytic converter, in an engine idling stage that after an engine is started and before a catalytic converter is ignited. In case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control, until an excess air coefficient sensor falls into a closed loop, to simultaneously reduce emission of NMOG and NOx.

In order to achieve the above object, technical solutions of the present application are achieved as follows.

An excess air coefficient control apparatus of the gasoline engine catalytic converter includes:
an excess air coefficient sensor configured to detect amount of intake air for fuel combustion, and to calculate a ratio of the amount of intake air for fuel combustion to a prestored standard air amount;
a controller configured to adjust the amount of intake air for fuel combustion in an engine idling stage that after an engine is started and before a catalytic converter is ignited, to switch an excess air coefficient between a first set value and a second set value until the excess air coefficient sensor falls into a closed loop;
where, the excess air coefficient is a ratio of the amount of intake air for fuel combustion to a standard air amount, in case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control.

Further, the first set value ranges at [1, 1.05], and the second set value ranges at [0.95, 1].

Further, the excess air coefficient control apparatus of the gasoline engine catalytic converter further includes a timer for detecting durations after that the excess air coefficient is switched to the first set value or the second set value;
where the process of controlling an excess air coefficient to switch between a first set value and a second set value includes:
controlling the excess air coefficient to switch to the second set value after maintaining the first set value for a first set time period, and controlling the excess air coefficient to switch to the first set value after maintaining the second set value for a second set time period.

Further, a duration of the first set time period is longer than a duration of the second set time period.

Further, the duration of the first set time period ranges from 4s to 5s, and the duration of the second set time period ranges from 2s to 3s.

The excess air coefficient control apparatus of the gasoline engine catalytic converter and the above excess air coefficient control method of the gasoline engine catalytic converter have the same advantages over the conventional technology, which is not be repeated here.

Another object of the present application is to provide a vehicle, to control an excess air coefficient to switch between a first set value and a second set value through the excess air coefficient control apparatus of the gasoline engine catalytic converter, in an engine idling stage that after an engine is started and before a catalytic converter is ignited. In case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control, until an excess air coefficient sensor falls into a closed loop, to simultaneously reduce emission of NMOG and NOx.

In order to achieve the above object, technical solutions of the present application are achieved as follows.

A vehicle includes the above excess air coefficient control apparatus of the gasoline engine catalytic converter.

The vehicle and the above excess air coefficient control method of the gasoline engine catalytic converter have the same advantages over the conventional technology, which is not repeated here.

Another object of the present application is to provide a machine-readable storage medium, to control an excess air coefficient to switch between a first set value and a second set value through the excess air coefficient control apparatus of the gasoline engine catalytic converter, in an engine idling stage that after an engine is started and before a catalytic converter is ignited. In case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control, until an excess air coefficient sensor falls into a closed loop, to simultaneously reduce emission of NMOG and NOx.

In order to achieve the above object, technical solutions of the present application are achieved as follows.

A machine-readable storage medium having instructions stored thereon, where the instructions are used for causing a machine to execute the above excess air coefficient control method of the gasoline engine catalytic converter.

The machine-readable storage medium and the above excess air coefficient control method of the gasoline engine catalytic converter have the same advantages over the conventional technology, which is not repeated here.

Other features and advantages of the present application are described in detail in the following specific embodiments.

### BRIEF DESCRIPTION OF THE DRAWINGS

The accompanying drawings constituting a part of the present application are used to provide a further understanding of the present application, and exemplary embodiments and its descriptions of the present application are used to explain the present application, and do not constitute an improper limitation of the present application. In the accompanying drawings:
FIG. 1 is a schematic diagram of a lean control strategy and corresponding emission values in the conventional technology;
FIG. 2 is a schematic diagram of an enrichment control strategy and corresponding emission values in the conventional technology;
FIG. 3a is a schematic diagram of a first alternate combination control strategy and corresponding emission values;
FIG. 3b is a schematic diagram of a second alternate combination control strategy and corresponding emission values;
FIG. 3c is a schematic diagram of a third alternate combination control strategy and corresponding emission values;
FIG. 4 is a schematic diagram of the optimal alternate combination control strategy and corresponding emission values provided according to an embodiment of the present application;
FIG. 5 is a structural schematic diagram of an excess air coefficient control apparatus of a gasoline engine catalytic converter provided according to an embodiment of the present application.

### DETAILED DESCRIPTION OF THE EMBODIMENTS

It should be noted that embodiments of the present application and features of the embodiments may be combined with each other in case that there is no conflict. The invention is defined by the appended claims.

In an engine idling stage that after an engine is started and before a catalytic converter is ignited, an excess air coefficient is controlled to switch between a first set` value and a second set value. Specifically, the excess air coefficient refers to a ratio of the amount of intake air for fuel combustion to a standard air amount, which is an important parameter for reflecting a ratio of fuel to air. In case that the excess air coefficient is controlled at the first set value, an air-fuel ratio is formed greater than 14.7 to perform a lean control (the excess air coefficient is greater than 1), to reduce emission of NMOG; and in case that the excess air coefficient is controlled at the second set value, the air-fuel ratio is formed less than 14.7 to perform an enrichment control (the excess air coefficient is less than 1). Oxygen content is fairly low during the enrichment control stage, a reaction of CO and NOx is occurred to reduce emission of NOx. Repeating in this way, the excess air coefficient is controlled to switch between the first set value and the second set value, until an excess air coefficient sensor falls into a closed loop.

In an engine idling stage that after an engine is started and before a catalytic converter is ignited, the excess air coefficient is controlled to range from 0.95 to 1.05. Specifically, the first set value may be provided to range at [1, 1.05], and the second set value may be provided to range at [0.95, 1]. The excess air coefficient is preferably close to 1.

Hereinafter, the present application will be described in detail with reference to the accompanying drawings and in conjunction with the embodiments.

In addition, durations of the lean control and the enrichment control in the above alternate combination control stage need to be explained. Although they are both alternate combination control, in case that durations of the lean control and the enrichment control are different, emission value of generated emissions may also be affected. FIG. 3a to FIG. 3c show schematic diagrams of different emission values caused by performing different control to durations of the lean control and the enrichment control.

FIG. 3a shows a schematic diagram of a first alternate combination control strategy and corresponding emission values. As shown in FIG. 3a, the excess air coefficient is controlled to switch to the second set value after maintaining the first set value for the first set time period t1, and the excess air coefficient is controlled to switch to the first set value after maintaining the second set value for the second set time period t2. Specifically, a duration the first set time period t1 is controlled to be longer than a duration of the second set time period t2, where the duration of the first set time period t1 is longer than 5s, and the duration of the second set time period t2 is longer than 0s, and time 1 is a time that the excess air coefficient sensor falls into a closed loop. As shown in FIG. 3a, in a control manner of set time period corresponding to the above first alternate combination control strategy, an emission value of NMOG is 46 and an emission value of NOx is 8. According to the emission values, a total amount of NMOG+NOx under the first alternate combination control manner is less than a total amount of NMOG+NOx under only lean control or only enrichment control in the conventional technology.

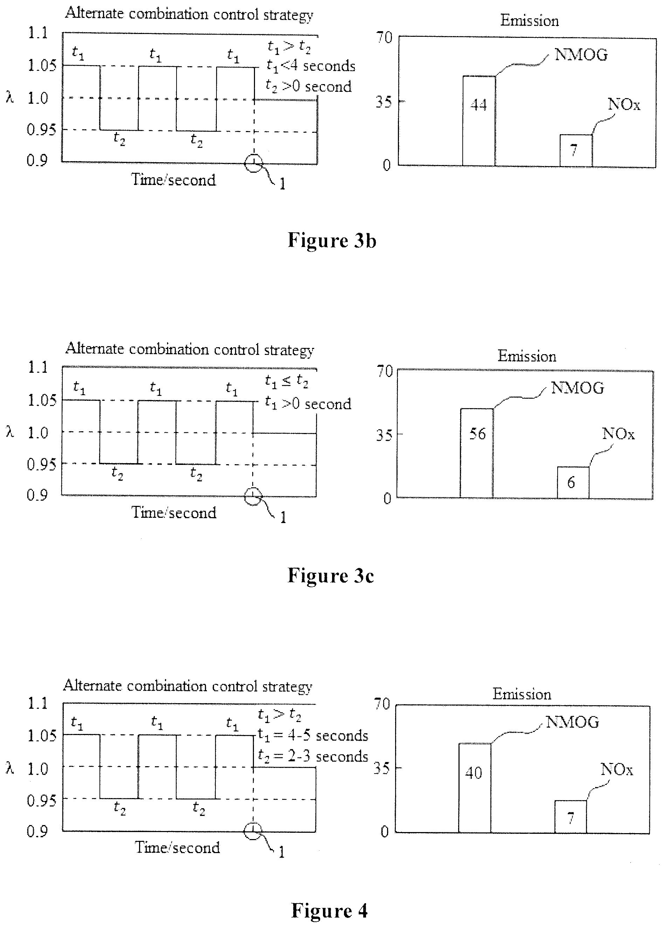

FIG. 3b shows a schematic diagram of a second alternate combination control strategy and corresponding emission values. As shown in FIG. 3b, the excess air coefficient is controlled to switch to the second set value after maintaining the first set value for the first set time period t1, and the excess air coefficient is controlled to switch to the first set value after maintaining the second set value for the second set time period t2. Specifically, a duration the first set time period t1 is controlled to be longer than a duration of the second set time period t2, where the duration of the first set time period t1 is less than 4s, and the duration of the second set time period t2 is longer than 0s, and time 1 is a time that the excess air coefficient sensor falls into a closed loop. As shown in FIG. 3b, in a control manner of set time period corresponding to the above second alternate combination control strategy, an emission value of NMOG is 44 and an emission value of NOx is 7. According to the emission values, a total amount of NMOG+NOx under the second alternate combination control manner is less than a total amount of NMOG+NOx under only lean control or only enrichment control in the conventional technology. In addition, the total amount of NMOG+NOX under the second alternate combination control manner is less than the total amount of NMOG+NOX under the first alternate combination control manner.

FIG. 3c shows a schematic diagram of a third alternate combination control strategy and corresponding emission values. As shown in FIG. 3c, the excess air coefficient is controlled to switch to the second set value after maintaining the first set value for the first set time period t1, and the excess air coefficient is controlled to switch to the first set value after maintaining the second set value for the second set time period t2. Specifically, a duration the first set time period t1 is controlled to be less than or equal to a duration of the second set time period t2, where the duration of the first set time period t1 is longer than 0s, and time 1 is a time that the excess air coefficient sensor falls into a closed loop. As shown in FIG. 3c, in a control manner of set time period corresponding to the above third alternate combination control strategy, an emission value of NMOG is 56 and an emission value of NOx is 6. According to the emission values, a total amount of NMOG+NOx under the third alternate combination control manner is greater than a total amount of NMOG+NOx under only lean control in the conventional technology and is less than a total amount of NMOG+NOx under only enrichment control in the conventional technology. Specifically, since in the third alternate combination control manner, the duration the first set time period t1 is controlled to be less than or equal to the duration of the second set time period t2, (i.e., a duration of the lean control is less than or equal to a duration of the enrichment control), where the duration of the first set time period t1 is longer than 0s. Although emission of NOx is reduced compared to the first and second alternate combination control strategies, the reduction is not significant. However, due to a short duration of the lean control, emission of NMOG failed to be effectively reduced, and due to a long duration of the enrichment control, a large amount of NMOG is discharged, so that a total amount of NMOG+NOx is significantly greater than a total amount of NMOG+NOx under only lean control in the conventional technology.

According to test results of the above three alternate control strategies, it is concluded that in order to reduce the total amount of NMOG+NOx, the first set time period t1 for which the excess air coefficient is controlled to be maintained at the first set value should be longer than the second set time period t2 for which the excess air coefficient is controlled to be maintained at the second set value, that is, the duration of the lean control is longer than the duration of the enrichment control.

FIG. 4 shows a schematic diagram of the optimal alternate combination control strategy and corresponding emission values provided according to an embodiment of the present application. Similarly, the excess air coefficient is controlled to switch to the second set value after maintaining the first set value for the first set time period t1, and the excess air coefficient is controlled to switch to the first set value after maintaining the second set value for the second set time period t2. A duration the first set time period t1 is controlled to be longer than a duration of the second set time period t2, and time 1 is a time that the excess air coefficient sensor falls into a closed loop. Preferably, the duration of the first set time period t1 ranges from 4s to 5s, and the duration of the second set time period t2 ranges from 2s to 3s. In an engine idling stage that after an engine is started and before a catalytic converter is ignited, a target air-fuel ratio is alternately controlled with unequal time durations, since oxygen content is excessive, an average air-fuel ratio is controlled by prolonging control time of the lean control (in case that air-fuel ratio is greater than 14.7). That is, a duration of the lean control is longer than a duration of the enrichment control (in case that air-fuel ratio is less than 14.7), so as to reduce emission of NMOG. Further, a redox reaction of CO and NOx in the combustion mixture is occurred in a formula of CO + NO → N₂ + CO₂, so as to reduce generation of NOx, thereby reducing a total amount of NMOG+NOx. According to the emission values shown in FIG. 4, under the optimal alternate combination control manner, an emission value of NMOG is 40 and an emission value of NOx is 7, so a total amount of NMOG+NOx under the optimal alternate combination control manner is significantly less than a total amount of NMOG+NOx under only lean control or only enrichment control in the conventional technology, which is also less than a total amount of NMOG+NOx tested under any one of the above three alternate combination control strategies.

The above optimal alternate combination control strategy does not require secondary air injection operation, which greatly reduces the cost. By adopting the above optimal alternate combination control strategy, a total amount of NMOG+NOx in the SULEV20 regulations may be reduced to a lower value, which may meet stricter emission requirements in the future and improve environmental protection functions of the vehicle.

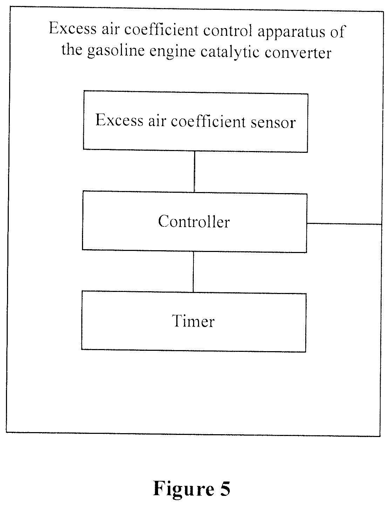

FIG. 5 shows a structural schematic diagram of an excess air coefficient control apparatus of a gasoline engine catalytic converter provided according to an embodiment of the present application. As shown in FIG. 5, the excess air coefficient control apparatus of the gasoline engine catalytic converter may include an excess air coefficient sensor, a controller and a timer. Specifically, the excess air coefficient sensor is configured to detect amount of intake air for fuel combustion, and to calculate a ratio of the amount of intake air for fuel combustion to a prestored standard air amount. The controller is configured to adjust the amount of intake air for fuel combustion in an engine idling stage that after an engine is started and before a catalytic converter is ignited, to switch the excess air coefficient between the first set value and the second set value until the excess air coefficient sensor falls into a closed loop. Preferably, the first set value ranges at [1, 1.05], and the second set value ranges at [0.95, 1]. The timer is configured to detect durations after that the excess air coefficient is switched to the first set value or the second set value. The process of controlling an excess air coefficient to switch between a first set value and a second set value includes: controlling the excess air coefficient to switch to the second set value after maintaining the first set value for a first set time period, and controlling the excess air coefficient to switch to the first set value after maintaining the second set value for a second set time period. Preferably, a duration of the first set time period is longer than a duration of the second set time period, where the duration of the first set time period ranges from 4s to 5s, and the duration of the second set time period ranges from 2s to 3s.

For the above technical solutions, other alternatives may further be provided, for example, mild-enrichment combustion (with an air-fuel ratio less than 14.7) may be used, and secondary air injection technology may be used to inject air into an exhaust pipe for a second time. That is, air is introduced into an exhaust system through a pump, an inhalation valve or other methods, to help to oxidize total hydrocarbon (THC) and carbon monoxide (CO) in the exhaust gas.

An embodiment of the present application further provides a vehicle, which includes the above excess air coefficient control apparatus of the gasoline engine catalytic converter.

An embodiment of the present application further provides a machine-readable storage medium, which has instructions stored thereon, where the instructions are used for causing a machine to execute the above excess air coefficient control method of the gasoline engine catalytic converter method.

## Claims

1. An excess air coefficient control method of a gasoline engine catalytic converter, comprising:
controlling an excess air coefficient to switch between a first set value and a second set value until an excess air coefficient sensor falls into a closed loop, in an engine idling stage that after an engine is started and before a catalytic converter is ignited;
wherein, the excess air coefficient is a ratio of the amount of intake air for fuel combustion to a standard air amount, wherein in case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control, and
wherein the process of controlling an excess air coefficient to switch between a first set value and a second set value comprises:
controlling the excess air coefficient to switch to the second set value after maintaining the first set value for a first set time period, and controlling the excess air coefficient to switch to the first set value after maintaining the second set value for a second set time period.

2. The excess air coefficient control method of the gasoline engine catalytic converter according to claim 1, wherein the first set value ranges at [1, 1.05], and the second set value ranges at [0.95, 1].

3. The excess air coefficient control method of the gasoline engine catalytic converter according to claim 1, wherein a duration of the first set time period is longer than a duration of the second set time period.

4. The excess air coefficient control method of the gasoline engine catalytic converter according to claim 1, wherein the duration of the first set time period ranges from 4s to 5s, and the duration of the second set time period ranges from 2s to 3 s.

5. An excess air coefficient control apparatus of the gasoline engine catalytic converter, comprising:
an excess air coefficient sensor configured to detect amount of intake air for fuel combustion, and to calculate a ratio of the amount of intake air for fuel combustion to a prestored standard air amount;
a controller configured to adjust the amount of intake air for fuel combustion in an engine idling stage that after an engine is started and before a catalytic converter is ignited, to switch an excess air coefficient between a first set value and a second set value until the excess air coefficient sensor falls into a closed loop; and
a timer for detecting durations after that the excess air coefficient is switched to the first set value or the second set value;
wherein, the excess air coefficient is a ratio of the amount of intake air for fuel combustion to a standard air amount, in case that the excess air coefficient is controlled at the first set value, an air-fuel ratio is formed greater than 14.7 to perform a lean control, and in case that the excess air coefficient is controlled at the second set value, the air-fuel ratio is formed less than 14.7 to perform an enrichment control, and
wherein the process of controlling an excess air coefficient to switch between a first set value and a second set value comprises:
controlling the excess air coefficient to switch to the second set value after maintaining the first set value for a first set time period, and controlling the excess air coefficient to switch to the first set value after maintaining the second set value for a second set time period.

6. The excess air coefficient control apparatus of the gasoline engine catalytic converter according to claim 5, wherein the first set value ranges at [1, 1.05], and the second set value ranges at [0.95, 1].

7. The excess air coefficient control apparatus of the gasoline engine catalytic converter according to claim 5, wherein a duration of the first set time period is longer than a duration of the second set time period.

8. The excess air coefficient control apparatus of the gasoline engine catalytic converter according to claim 5, wherein the duration of the first set time period ranges from 4s to 5s, and the duration of the second set time period ranges from 2s to 3 s.

9. A vehicle, comprising the excess air coefficient control apparatus of the gasoline engine catalytic converter according to any one of claims 5 to 8.

10. A machine-readable storage medium having instructions stored thereon, wherein the instructions are used for causing a machine to execute the excess air coefficient control method of the gasoline engine catalytic converter method according to any one of claims 1 to 4.

## Patentansprüche

1. Verfahren zur Steuerung eines Luftüberschusskoeffizienten eines Katalysators eines Benzinmotors mit den Schritten:
Steuern eines Luftüberschusskoeffizienten, um zwischen einem ersten Sollwert und einem zweiten Sollwert zu wechseln, bis ein Luftüberschusskoeffizientensensor in einer Motorleerlaufphase, die nach einem Starten eines Motors und vor einer Zündung eines Katalysators stattfindet, in eine geschlossene Schleife fällt;
wobei der Luftüberschusskoeffizient ein Verhältnis der Ansaugluftmenge für die Kraftstoffverbrennung zu einer Standardluftmenge ist, wobei in dem Fall, dass der Luftüberschusskoeffizient auf den ersten Sollwert geregelt wird, ein Luft-Kraftstoff-Verhältnis von mehr als 14,7 gebildet wird, um eine Magerregelung durchzuführen, und in einem Fall, dass der Luftüberschusskoeffizient auf den zweiten Sollwert geregelt wird, das Luft-Kraftstoff-Verhältnis von weniger als 14,7 gebildet wird, um eine Anreicherungsregelung durchzuführen, und
wobei der Prozess des Steuerns eines Luftüberschusskoeffizienten zum Umschalten zwischen einem ersten Sollwert und einem zweiten Sollwert aufweist:
Steuern des Luftüberschusskoeffizienten, um auf den zweiten Sollwert umzuschalten, nachdem der erste Sollwert für eine erste eingestellte Zeitspanne beibehalten wurde, und Steuern des Luftüberschusskoeffizienten, um auf den ersten Sollwert umzuschalten, nachdem der zweite Sollwert für eine zweite eingestellte Zeitspanne beibehalten wurde.

2. Verfahren zur Steuerung des Luftüberschusskoeffizienten des Katalysators des Benzinmotors nach Anspruch 1, wobei der erste Sollwert im Bereich [1, 1,05] und der zweite Sollwert im Bereich [0,95, 1] liegt.

3. Verfahren zur Steuerung des Luftüberschusskoeffizienten des Katalysators des Benzinmotors nach Anspruch 1, wobei die Dauer der ersten eingestellten Zeitspanne länger als die Dauer der zweiten eingestellten Zeitspanne ist.

4. Verfahren zur Steuerung des Luftüberschusskoeffizienten des Katalysators des Benzinmotors nach Anspruch 1, wobei die Dauer der ersten eingestellten Zeitspanne im Bereich von 4s bis 5s liegt und die Dauer der zweiten eingestellten Zeitspanne im Bereich von 2s bis 3s liegt.

5. Vorrichtung zur Steuerung eines Luftüberschusskoeffizienten eines Katalysators eines Benzinmotors mit:
einem Luftüberschusskoeffizientensensor, der so konfiguriert ist, dass er eine Menge an Ansaugluft für eine Kraftstoffverbrennung erfasst und ein Verhältnis einer Menge der Ansaugluft für die Kraftstoffverbrennung zu einer vorgespeicherten Standardluftmenge berechnet;
einer Steuerung, die so konfiguriert ist, dass sie die Menge der Ansaugluft für die Kraftstoffverbrennung in einer Motorleerlaufphase, die nach einem Starten eines Motors und vor einer Zündung eines Katalysators stattfindet, einstellt, um einen Luftüberschusskoeffizienten zwischen einem ersten Sollwert und einem zweiten Sollwert umzuschalten, bis der Luftüberschusskoeffizientensensor in eine geschlossene Schleife fällt; und
einem Zeitgeber zum Erfassen von Zeitspannen, nach denen der Luftüberschusskoeffizient auf den ersten Sollwert oder den zweiten Sollwert umgeschaltet wird;
wobei
der Luftüberschusskoeffizient ein Verhältnis der Ansaugluftmenge für die Kraftstoffverbrennung zu einer Standardluftmenge ist,
für den Fall, dass der Luftüberschusskoeffizient auf den ersten Sollwert geregelt wird, ein Luft-Kraftstoff-Verhältnis von mehr als 14,7 gebildet wird, um eine Magerregelung durchzuführen, und
für den Fall, dass der Luftüberschusskoeffizient auf den zweiten Sollwert geregelt wird, das Luft-Kraftstoff-Verhältnis geringer als 14,7 gebildet wird, um eine Anreicherungsregelung durchzuführen, und
wobei der Prozess des Steuerns eines Luftüberschusskoeffizienten, um zwischen einem ersten Sollwert und einem zweiten Sollwert umzuschalten, die Schritte aufweist:
Steuern des Luftüberschusskoeffizienten, um auf den zweiten Sollwert umzuschalten, nachdem der erste Sollwert für eine erste eingestellte Zeitspanne beibehalten wurde, und Steuern des Luftüberschusskoeffizienten, um auf den ersten Sollwert umzuschalten, nachdem der zweite Sollwert für eine zweite eingestellte Zeitspanne beibehalten wurde.

6. Vorrichtung zur Steuerung des Luftüberschusskoeffizienten des Katalysators des Benzinmotors nach Anspruch 5, wobei der erste Sollwert im Bereich [1, 1,05] und der zweite Sollwert im Bereich [0,95, 1] liegt.

7. Vorrichtung zur Steuerung des Luftüberschusskoeffizienten des Katalysators des Benzinmotors nach Anspruch 5, wobei die Dauer der ersten eingestellten Zeitspanne länger als die Dauer der zweiten eingestellten Zeitspanne ist.

8. Vorrichtung zur Steuerung des Luftüberschusskoeffizienten des Katalysators des Benzinmotors nach Anspruch 5, wobei die Dauer der ersten eingestellten Zeitspanne im Bereich von 4s bis 5s liegt und die Dauer der zweiten eingestellten Zeitspanne im Bereich von 2s bis 3s liegt.

9. Fahrzeug, das die Vorrichtung zur Steuerung des Luftüberschusskoeffizienten des Katalysators des Benzinmotors nach einem der Ansprüche 5 bis 8 aufweist.

10. Maschinenlesbares Speichermedium mit darauf gespeicherten Befehlen, wobei die Befehle dazu verwendet werden, eine Maschine zu veranlassen, das Verfahren zur Steuerung des Luftüberschusskoeffizienten des Katalysators des Benzinmotors nach einem der Ansprüche 1 bis 4 auszuführen.

## Revendications

1. Procédé de régulation de coefficient d'air en excès d'un convertisseur catalytique de moteur à essence, comprenant :
la régulation d'un coefficient d'air en excès pour effectuer une commutation entre une première valeur de consigne et une seconde valeur de consigne jusqu'à ce qu'un capteur de coefficient d'air en excès en vienne à fonctionner en boucle fermée, lors d'une phase de fonctionnement au ralenti de moteur, c'est-à-dire après qu'un moteur est démarré et avant qu'un convertisseur catalytique ne soit déclenché ;
dans lequel le coefficient d'air en excès est un rapport de la quantité d'air d'admission pour la combustion du carburant sur une quantité d'air standard, dans lequel, dans le cas où le coefficient d'air en excès est régulé à la première valeur de consigne, un rapport air-carburant est formé de telle sorte qu'il soit supérieur à 14,7 pour effectuer une régulation à mélange pauvre, et dans le cas où le coefficient d'air en excès est régulé à la seconde valeur de consigne, le rapport air-carburant est formé de telle sorte qu'il soit inférieur à 14,7 pour effectuer une régulation à mélange riche ; et
dans lequel le processus de régulation d'un coefficient d'air en excès pour effectuer une commutation entre une première valeur de consigne et une seconde valeur de consigne comprend :
la régulation du coefficient d'air en excès pour effectuer une commutation sur la seconde valeur de consigne après le maintien de la première valeur de consigne pendant une première période temporelle de consigne, et la régulation du coefficient d'air en excès pour effectuer une commutation sur la première valeur de consigne après le maintien de la seconde valeur de consigne pendant une seconde période temporelle de consigne.

2. Procédé de régulation de coefficient d'air en excès du convertisseur catalytique de moteur à essence selon la revendication 1, dans lequel la première valeur de consigne s'inscrit à l'intérieur d'une plage de [1, 1,05] et la seconde valeur de consigne s'inscrit à l'intérieur d'une plage de [0,95, 1].

3. Procédé de régulation de coefficient d'air en excès du convertisseur catalytique de moteur à essence selon la revendication 1, dans lequel une durée de la première période temporelle de consigne est plus longue qu'une durée de la seconde période temporelle de consigne.

4. Procédé de régulation de coefficient d'air en excès du convertisseur catalytique de moteur à essence selon la revendication 1, dans lequel la durée de la première période temporelle de consigne s'inscrit à l'intérieur d'une plage de 4 s à 5 s et la durée de la seconde période temporelle de consigne s'inscrit à l'intérieur d'une plage de 2 s à 3 s.

5. Appareil de régulation de coefficient d'air en excès du convertisseur catalytique de moteur à essence, comprenant :
un capteur de coefficient d'air en excès qui est configuré pour détecter la quantité d'air d'admission pour la combustion du carburant, et pour calculer un rapport de la quantité d'air d'admission pour la combustion du carburant sur une quantité d'air standard pré-stockée ;
un contrôleur qui est configuré pour régler la quantité d'air d'admission pour la combustion du carburant lors d'une phase de fonctionnement au ralenti de moteur, c'est-à-dire après qu'un moteur est démarré et avant qu'un convertisseur catalytique ne soit déclenché, pour effectuer une commutation d'un coefficient d'air en excès entre une première valeur de consigne et une seconde valeur de consigne jusqu'à ce que le capteur de coefficient d'air en excès en vienne à fonctionner en boucle fermée ; et
un temporisateur pour détecter des durées après que le coefficient d'air en excès est commuté sur la première valeur de consigne ou sur la seconde valeur de consigne ;
dans lequel le coefficient d'air en excès est un rapport de la quantité d'air d'admission pour la combustion du carburant sur une quantité d'air standard, dans lequel, dans le cas où le coefficient d'air en excès est régulé à la première valeur de consigne, un rapport air-carburant est formé de telle sorte qu'il soit supérieur à 14,7 pour effectuer une régulation à mélange pauvre, et dans le cas où le coefficient d'air en excès est régulé à la seconde valeur de consigne, le rapport air-carburant est formé de telle sorte qu'il soit inférieur à 14,7 pour effectuer une régulation à mélange riche ; et
dans lequel le processus de régulation d'un coefficient d'air en excès pour effectuer une commutation entre une première valeur de consigne et une seconde valeur de consigne comprend :
la régulation du coefficient d'air en excès pour effectuer une commutation sur la seconde valeur de consigne après le maintien de la première valeur de consigne pendant une première période temporelle de consigne, et la régulation du coefficient d'air en excès pour effectuer une commutation sur la première valeur de consigne après le maintien de la seconde valeur de consigne pendant une seconde période temporelle de consigne.

6. Appareil de régulation de coefficient d'air en excès du convertisseur catalytique de moteur à essence selon la revendication 5, dans lequel la première valeur de consigne s'inscrit à l'intérieur d'une plage de [1, 1,05] et la seconde valeur de consigne s'inscrit à l'intérieur d'une plage de [0,95, 1].

7. Appareil de régulation de coefficient d'air en excès du convertisseur catalytique de moteur à essence selon la revendication 5, dans lequel une durée de la première période temporelle de consigne est plus longue qu'une durée de la seconde période temporelle de consigne.

8. Appareil de régulation de coefficient d'air en excès du convertisseur catalytique de moteur à essence selon la revendication 5, dans lequel la durée de la première période temporelle de consigne s'inscrit à l'intérieur d'une plage de 4 s à 5 s et la durée de la seconde période temporelle de consigne s'inscrit à l'intérieur d'une plage de 2 s à 3 s.

9. Véhicule, comprenant l'appareil de régulation de coefficient d'air en excès du convertisseur catalytique de moteur à essence selon l'une quelconque des revendications 5 à 8.

10. Support de stockage pouvant être lu par une machine et comportant des instructions stockées en son sein, dans lequel les instructions sont utilisées pour faire en sorte qu'une machine exécute le procédé de régulation de coefficient d'air en excès du procédé de régulation de coefficient d'air en excès d'un convertisseur catalytique de moteur à essence selon l'une quelconque des revendications 1 à 4.
